# EUROPEAN PATENT APPLICATION

(11) **EP 4 847 562 A1**
(43) Date of publication of application: **02.12.2026**
(21) Application number: 24920144.3
(22) Date of filing: 04.12.2024
(51) Int. Cl.: C08L 69/00, C08G 64/04, C08G 64/18, C08K 3/34

(54) **POLYCARBONATE RESIN COMPOSITION AND MOLDED ARTICLE COMPRISING SAME**

(30) Priority: 24.01.2024 JP 2024008457; 01.02.2024 JP 2024013877
(71) Applicant: TEIJIN LIMITED, Kita-ku, Osaka-shi, Osaka 530-0005 (JP)
(72) Inventor: FUJIMOTO, Daiki, Osaka-shi, Osaka 530-0005 (JP); IBUSUKI, Shun, Osaka-shi, Osaka 530-0005 (JP)
(74) Representative: Kraus & Lederer PartGmbB
(86) International application number: PCT/JP2024/042832
(87) International publication number: WO 2025/158787

(57) **Abstract**

The present invention provides a polycarbonate resin composition that is excellent in flame retardancy, forming processability, low heat generation property, and low smoke emission property and a formed article formed therefrom. The polycarbonate resin composition of the present invention contains (A) a resin having a carbonate structural unit derived from a dihydric phenol compound (component A), (B) a resin having a siloxane structural unit (component B), and (C) a resin having 9,9-bis(4-hydroxy-3-alkylphenyl)fluorene structural unit or a structural unit derived therefrom (component C). In 100 parts by mass of the resin composition, the amount of the Si element derived from the siloxane structural unit is in the range of 0.3 to 30.0 parts by mass, and the component C content is in the range of 1.0 to 40 parts by mass. Alternatively, the component A and a resin having a predetermined structural unit E (component E) are contained, and the structural unit E content is 5 to 70 parts by mass.

## Description

### Technical Field

The present invention relates to a polycarbonate resin composition that is excellent in flame retardancy and forming processability, a polycarbonate resin composition that is excellent in flame retardancy, low heat generation property, and low smoke emission property, and a formed article formed therefrom.

### Background Art

Polycarbonate resins are excellent in transparency, impact resistance, heat resistance, and dimensional stability and thus are used as engineering plastics in a wide range of fields such as housings of electrical and electronic devices, automobile interior and exterior parts, building materials, furniture, musical instruments, and miscellaneous goods.

In recent years, weight reduction and easy processability have been major requirements for interior materials of aircraft and railway vehicles. Polycarbonate resins have attracted attention as materials satisfying the properties, but the polycarbonate resins in the related art have a problem because the polycarbonate resins cannot satisfy the strict flame retardancy standard required for interior materials of aircraft and railway vehicles. In order to solve this problem, many studies to add a flame retardant, a resin having high LOI (limited oxygen index), or an inorganic filler to a polycarbonate resin have been made. PTL 1 discloses a method for improving flame retardancy by adding a polycarbonate having a bisphenol C skeleton, a phosphorus-based flame retardant, and a silicone-based flame retardant to a polycarbonate resin. However, the flame retardancy obtained by this method cannot be considered sufficient. Moreover, PTL 2 discloses a method for improving flame retardancy by controlling the orientation angle of an inorganic filler in a resin sheet. However, the flame retardancy obtained in this method is not sufficient, and because it is necessary to control the orientation of the filler, the processability cannot be considered excellent.

In recent years, there have been great demands for flame retardancy of resin materials to be used mainly for applications such as OA equipment and home electric appliances, and in order to meet these demands, many studies on flame retardancy have been made. In the related art, in such a polymer alloy, a combination of a halogen-based flame retardant having a bromine atom or the like and a flame retardant aid such as antimony trioxide has been generally used, but studies of flame retardancy without containing any halogen-based compound have been actively made due to the problem of generation of a harmful substance during combustion. For example, a method of blending triphenyl phosphate and polytetrafluoroethylene having fibril-forming ability in a polymer alloy with a polycarbonate resin (PTL 3), a method of blending a phosphate-based oligomer which is a condensed phosphate ester (PTL 4), and the like have been proposed. At the same time, in recent years, in addition to the basic flame retardance performance, there is an increasing demand for low heat generation property and low smoke emission property at the time of combustion, and it is required that all of these characteristics are satisfied at a high level for interior materials of aircraft and railway vehicles.

In order to solve such a problem, for example, a method of blending a polyarylate resin, a silicone compound, and a phosphate ester in a polycarbonate resin (PTL 5) has been proposed. However, the heat generation property obtained by this method cannot be considered sufficient, and the smoke emission property is not mentioned. A method of blending a polycarbonate having a bisphenol C skeleton, a phosphorus-based flame retardant, and a silicone flame retardant in a polycarbonate resin (PTL 6) has also been proposed. However, the heat generation property and the smoke emission property obtained by this method cannot be considered sufficient, and the flame retardancy is not described at all.

### Citation List

### Patent Literature

PTL 1: WO2018/047693
PTL 2: JP6568639B
PTL 3: JPH02-32154A
PTL 4: JPH02-115262A
PTL 5: JP2021-38298A
PTL 6: JP6285085B

### Summary of Invention

### Technical Problem

The present invention provides a polycarbonate resin composition that is excellent in flame retardancy and forming processability, a polycarbonate resin composition that is excellent in flame retardancy, low heat generation property, and low smoke emission property, and a formed article formed therefrom.

### Solution to Problem

According to the present invention, the object of the present invention is achieved by the following polycarbonate resin composition and the formed article thereof.

### (Configuration 1)

A polycarbonate resin composition containing
(A) a polycarbonate resin having a carbonate structural unit derived from a dihydric phenol compound (component A),
(B) a resin having a siloxane structural unit (component B), and
(C) a resin having 9,9-bis(4-hydroxy-3-alkylphenyl)fluorene structural unit or a structural unit derived therefrom (component C)

in which with respect to 100 parts by mass of the polycarbonate resin composition,
the amount of the Si element derived from the siloxane structural unit of the component B is in the range of 0.3 to 30.0 parts by mass, and
the component C content is in the range of 1.0 to 40 parts by mass.

### (Configuration 2)

The polycarbonate resin composition according to configuration 1 containing
5 to 30 parts by mass of (D) at least one inorganic filler selected from the group consisting of talc, wollastonite, mica, and kaolin (component D)
with respect to 100 parts by mass of the polycarbonate resin composition.

### (Configuration 3)

The polycarbonate resin composition according to configuration 1 or configuration 2 in which the component A contains a polycarbonate resin having a carbonate structural unit derived from bisphenol A.

### (Configuration 4)

The polycarbonate resin composition according to any of configurations 1 to 3 in which the component B contains a resin having a siloxane structural unit derived from a polydiorganosiloxane.

### (Configuration 5)

The polycarbonate resin composition according to any of configurations 1 to 4 in which the component B contains a polycarbonate copolymer obtained using bisphenol A and a polydiorganosiloxane as raw materials.

### (Configuration 6)

The polycarbonate resin composition according to any of configurations 1 to 5 in which the resin having the structural unit derived from 9,9-bis(4-hydroxy-3-alkylphenyl)fluorene of the component C contains a polycarbonate copolymer obtained using 9,9-bis(4-hydroxy-3-alkylphenyl)fluorene and another dihydric phenol compound as raw materials.

### (Configuration 7)

The polycarbonate resin composition according to any of configurations 1 to 6 in which the resin having the 9,9-bis(4-hydroxy-3-alkylphenyl)fluorene structural unit of the component C contains a polycarbonate copolymer obtained using bisphenol A and 9,9-bis(4-hydroxy-3-alkylphenyl)fluorene as raw materials.

### (Configuration 8)

The polycarbonate resin composition according to any of configurations 1 to 7 in which the maximum average rate of heat emission tested under conditions of a heater irradiance of 50 kW/m² and with an ignition in accordance with ISO5660-1 is 90 kW/m² or less.

### (Configuration 9)

A formed article formed from the polycarbonate resin composition according to any one of configurations 1 to 8.

### (Configuration 10)

The formed article according to configuration 9 which is a railcar interior member.

### (Configuration 11)

A polycarbonate resin composition containing
(A) a polycarbonate resin having a carbonate structural unit derived from a dihydric phenol compound (component A) and
(E) a resin having at least one structural unit of structural units represented by the following formulae (1) to (3) (structural units E) (component E)
in which the polycarbonate resin composition contains at least one of the structural units E in the range of 5 to 70 parts by mass
with respect to 100 parts by mass of the polycarbonate resin composition.

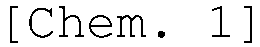

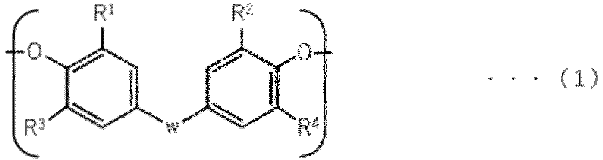

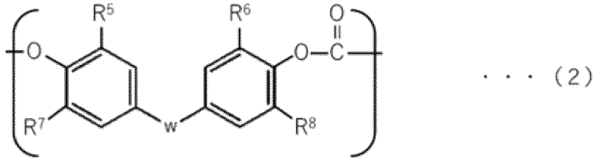

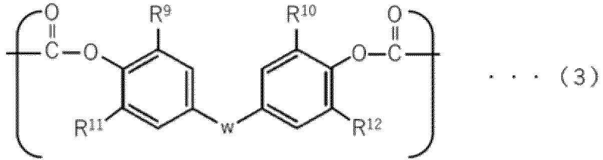

In the formulae (1) to (3),
R¹ to R¹² represent alkyl groups,
W represents the following formula (4), and
R¹³ to R²² each represent a hydrogen atom or a methyl group:

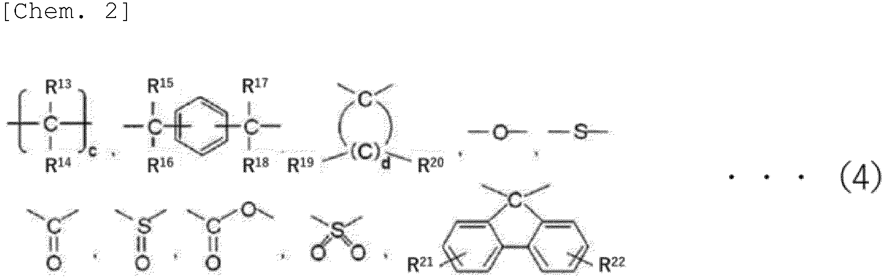

### (Configuration 12)

The polycarbonate resin composition according to configuration 11 in which W is a fluorene derivative.

### (Configuration 13)

The polycarbonate resin composition according to configuration 11 or 12
which further contains (B) a resin having a siloxane structural unit (component B) and
in which the amount of the Si element derived from the siloxane structural unit of the component B is 0.3 to 10.0 parts by mass
with respect to 100 parts by mass of the polycarbonate resin composition.

### (Configuration 14)

The polycarbonate resin composition according to any of configurations 11 to 13 further containing
5 to 30 parts by mass of (D) at least one inorganic filler selected from the group consisting of talc, wollastonite, mica, and kaolin (component D)
with respect to 100 parts by mass of the polycarbonate resin composition.

### (Configuration 15)

A formed article formed from the polycarbonate resin composition according to any of configurations 11 to 14.

### (Configuration 16)

The formed article according to configuration 15 which is a railcar interior member.

### Advantageous Effects of Invention

Since the polycarbonate resin composition of the first aspect of the present invention is considerably superior in flame retardancy and forming processability to polycarbonate resin compositions in the related art, the polycarbonate resin composition is widely useful in aviation applications, railroad applications, and various other applications, and the industrial effects of the present invention are extremely high. In addition, since the polycarbonate resin composition of the second aspect of the present invention is considerably superior in flame retardancy, low heat generation property, and low smoke emission property to polycarbonate resin compositions in the related art, the polycarbonate resin composition is widely useful in residential facility applications, building material applications, household material applications, infrastructure facility applications, automobile applications, OA·EE applications, aviation applications, railway applications, and various other applications, and the industrial effects of the present invention are extremely high.

### Description of Embodiments

Hereinafter, the details of the present invention will be further explained.

### <First Invention>

The polycarbonate resin composition of the first invention contains
(A) a polycarbonate resin having a carbonate structural unit derived from a dihydric phenol compound (component A),
(B) a resin having a siloxane structural unit (component B), and
(C) a resin having 9,9-bis(4-hydroxy-3-alkylphenyl)fluorene structural unit or
   a structural unit derived therefrom (component C) and further preferably contains
(D) an inorganic filler (component D). Hereinafter, each component will be explained.

### <(A) Polycarbonate Resin Having Carbonate Structural Unit Derived from Dihydric Phenol Compound (Component A)>

The (A) polycarbonate resin having a carbonate structural unit derived from a dihydric phenol compound (component A) used in the present invention can be obtained by reacting a dihydric phenol compound and a carbonate precursor. Examples of the reaction method include an interfacial polycondensation method, a melt transesterification method, a solid-phase transesterification method of a carbonate prepolymer, and a ring-opening polymerization method of a cyclic carbonate compound. The dihydric phenol compound does not include 9,9-bis{(4-hydroxy-3-alkyl)phenyl}fluorene described below.

Representative examples of the dihydric phenol compound used herein include hydroquinone, resorcinol, 4,4'-dihydroxydiphenyl, bis(4-hydroxyphenyl)methane, bis{(4-hydroxy-3,5-dimethyl)phenyl}methane, 1,1-bis(4-hydroxyphenyl)ethane, 1,1-bis(4-hydroxyphenyl)-1-phenylethane, 2,2-bis(4-hydroxyphenyl)propane (commonly called bisphenol A), 2,2-bis{(4-hydroxy-3-methyl)phenyl}propane, 2,2-bis{(4-hydroxy-3,5-dimethyl)phenyl}propane, 2,2-bis{(3-isopropyl-4-hydroxy)phenyl}propane, 2,2-bis{(4-hydroxy-3-phenyl)phenyl}propane, 2,2-bis(4-hydroxyphenyl)butane, 2,2-bis(4-hydroxyphenyl)-3-methylbutane, 2,2-bis(4-hydroxyphenyl)-3,3-dimethylbutane, 2,4-bis(4-hydroxyphenyl)-2-methylbutane, 2,2-bis(4-hydroxyphenyl)pentane, 2,2-bis(4-hydroxyphenyl)-4-methylpentane, 1,1-bis(4-hydroxyphenyl)cyclohexane, 1,1-bis(4-hydroxyphenyl)-4-isopropylcyclohexane, 1,1-bis(4-hydroxyphenyl)-3,3,5-trimethylcyclohexane, 9,9-bis(4-hydroxyphenyl)fluorene, α,α'-bis(4-hydroxyphenyl)-o-diisopropylbenzene, α,α'-bis(4-hydroxyphenyl)-m-diisopropylbenzene, α,α'-bis(4-hydroxyphenyl)-p-diisopropylbenzene, 1,3-bis(4-hydroxyphenyl)-5,7-dimethyladamantane, 4,4'-dihydroxydiphenylsulfone, 4,4'-dihydroxydiphenylsulfoxide, 4,4'-dihydroxydiphenylsulfide, 4,4'-dihydroxydiphenyl ketone, 4,4'-dihydroxydiphenyl ether, and 4,4'-dihydroxydiphenyl ester, and one kind thereof alone or a mixture of two or more kinds thereof can be used.

Of these, a polycarbonate homopolymer or a polycarbonate copolymer having a carbonate structural unit derived from at least one dihydric phenol compound selected from the group consisting of bisphenol A, 2,2-bis{(4-hydroxy-3-methyl)phenyl}propane, 2,2-bis(4-hydroxyphenyl)butane, 2,2-bis(4-hydroxyphenyl)-3-methylbutane, 2,2-bis(4-hydroxyphenyl)-3,3-dimethylbutane, 2,2-bis(4-hydroxyphenyl)-4-methylpentane, 1,1-bis(4-hydroxyphenyl)-3,3,5-trimethylcyclohexane, and α,α'-bis(4-hydroxyphenyl)-m-diisopropylbenzene is preferable, and a carbonate structural unit derived from bisphenol A is more preferably contained. In particular, a polycarbonate homopolymer having a carbonate structural unit derived from bisphenol A and a polycarbonate copolymer having carbonate structural units derived from bisphenol A, 1,1-bis(4-hydroxyphenyl)-3,3,5-trimethylcyclohexane, and bisphenol A, 2,2-bis{(4-hydroxy-3-methyl)phenyl}propane, or α,α'-bis(4-hydroxyphenyl)-m-diisopropylbenzene are preferably used.

As the carbonate precursor, a carbonyl halide, a carbonate ester, a haloformate, or the like is used, and specific examples thereof include phosgene, diphenyl carbonate, and dihaloformate of dihydric phenol.

When the polycarbonate resin is produced by reacting the dihydric phenol and the carbonate precursor through an interfacial polycondensation method or a melt transesterification method, a catalyst, a chain terminator, an antioxidant of a dihydric phenol, or the like may be used if necessary. The polycarbonate resin may be a branched polycarbonate resin obtained by copolymerizing a trifunctional or higher polyfunctional aromatic compound, a polyester carbonate resin obtained by copolymerizing an aromatic or aliphatic bifunctional carboxylic acid, or a mixture obtained by mixing two or more of the obtained polycarbonate resins.

The reaction types such as the interfacial polymerization method, the melt transesterification method, the solid-phase transesterification method of the carbonate prepolymer, and the ring-opening polymerization method of the cyclic carbonate compound, which are the methods for producing the polycarbonate resin of the present invention, are methods well known in various documents, patent publications, and the like.

When the viscosity-average molecular weight of the polycarbonate resin is less than 15,000, a crack may occur at the time of forming, and when the viscosity-average molecular weight exceeds 25,500, the fluidity is deteriorated, and the forming processability is sometimes deteriorated. Thus, the viscosity-average molecular weight is preferably 15,000 to 25,500, more preferably 15,300 to 25,000, and further preferably 15,500 to 24,500.

Two or more kinds of polycarbonate resins may be mixed. In this case, it is of course possible to mix a polycarbonate resin having a viscosity-average molecular weight out of the above range.

The viscosity-average molecular weight referred to in the present invention is determined by inserting the specific viscosity (η_{SP}) obtained from a solution obtained by dissolving 0.7 g of the polycarbonate resin in 100 ml of methylene chloride at 20°C into the following equation. 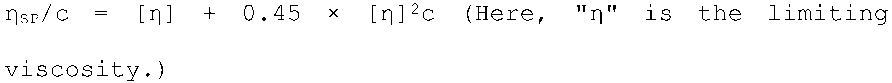 ηSP/c = [η] + 0.45 × [η]2c (Here, "η" is the limiting viscosity.) $\left[η\right] = 1.23 \times {10}^{- 4} {M}^{0.83}$

### c = 0.7

### <(B) Resin Having Siloxane Structural Unit (Component B)>

The (B) resin having a siloxane structural unit used as the component B of the present invention is not particularly limited as long as the structural unit contains an Si component, but from the viewpoint of flame retardancy, the resin preferably contains a siloxane structural unit derived from a polyorganosiloxane represented by the following formula (5). Of these, those having an aromatic ring such as a phenyl group in the molecule are preferable, and particularly from the viewpoint of the compatibility with the polycarbonate resin, a polycarbonate copolymer obtained using a bisphenol compound and a polyorganosiloxane as raw materials is preferable.

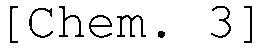

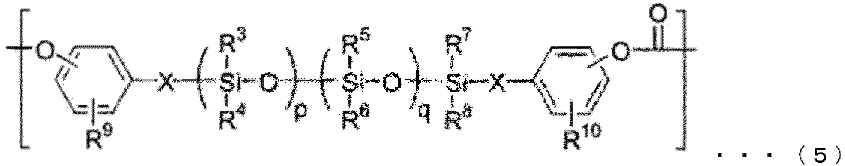

In the above formula (5), R³, R⁴, R⁵, R⁶, R⁷, and R⁸ are each independently a hydrogen atom, an alkyl group having 1 to 12 carbon atoms, or a substituted or unsubstituted aryl group having 6 to 12 carbon atoms.

Examples of the alkyl group having 1 to 12 carbon atoms include a methyl group, an ethyl group, a propyl group, a butyl group, a pentyl group, a hexyl group, a heptyl group, an octyl group, a nonyl group, a decyl group, and a dodecyl group. An alkyl group having 1 to 6 carbon atoms is preferable.

Examples of the substituted or unsubstituted aryl group having 6 to 12 carbon atoms include a phenyl group and a naphthyl group. Examples of the substituent include an alkyl group having 1 to 12 carbon atoms such as a methyl group, an ethyl group, a propyl group, a butyl group, a pentyl group, and a hexyl group.

R³, R⁴, R⁵, R⁶, R⁷, and R⁸ are each preferably a phenyl group, a propyl group, an ethyl group, or a methyl group and more preferably a methyl group.

R⁹ and R¹⁰ are each independently a hydrogen atom, a halogen atom, an alkyl group having 1 to 10 carbon atoms, or an alkoxy group having 1 to 10 carbon atoms.

Examples of the halogen atom include a fluorine atom, a chlorine atom, and a bromine atom.

Examples of the alkyl group having 1 to 10 carbon atoms include a methyl group, an ethyl group, a propyl group, a butyl group, a pentyl group, a hexyl group, a heptyl group, an octyl group, a nonyl group, a decyl group, and a dodecyl group. An alkyl group having 1 to 6 carbon atoms is preferable.

Examples of the alkoxy group having 1 to 10 carbon atoms include a methoxy group, an ethoxy group, a propoxy group, a butoxy group, a pentoxy group, a hexoxy group, a heptoxy group, and an octoxy group. An alkoxy group having 1 to 6 carbon atoms is preferable.

R⁹ and R¹⁰ are each preferably a hydrogen atom, a methoxy group, or an ethoxy group, more preferably a hydrogen atom or a methoxy group, and further preferably a hydrogen atom.
p is a natural number, preferably 20 to 100, more preferably 30 to 90, and further preferably 35 to 70.
q is 0 or a natural number, preferably 0 to 80, and more preferably 0 to 50.

The average chain length p+q is preferably a natural number of 20 to 100, more preferably a natural number of 30 to 90, and further preferably a natural number of 35 to 70. Within the above range, sufficient impact resistance is obtained, and the appearance (color unevenness, peeling defect) is also improved.

X is a divalent aliphatic group having 2 to 8 carbon atoms. Examples of the divalent aliphatic group include an alkylene group having 2 to 8 carbon atoms. Examples of the alkylene group include an ethylene group, a trimethylene group, and a tetramethylene group, and a trimethylene group is preferable.

The polydiorganosiloxane block represented by the above formula (5) is preferably a block derived from an alkenylphenol-terminated polydiorganosiloxane, more preferably a block derived from an allylphenol-terminated polydiorganosiloxane, and further preferably a block derived from a (2-allylphenol)-terminated polydiorganosiloxane or a (2-methoxy-4-allylphenol)-terminated polydiorganosiloxane. That is, in the formula (5), it is preferable that X is a trimethylene group and that R⁹ and R¹⁰ are hydrogen atoms, or it is preferable that X is a trimethylene group and that R⁹ and R¹⁰ are methoxy groups.

The content of the Si atoms derived from the siloxane structural unit used in the present invention is 0.3 to 30.0 parts by mass, preferably 0.5 to 25.0 parts by mass, and more preferably 2.0 to 20.0 parts by mass with respect to 100 parts by mass of the polycarbonate resin composition (the total of the (A) polycarbonate resin having a carbonate structural unit derived from a dihydric phenol compound, the (B) resin having a siloxane structural unit, the (C) resin having 9,9-bis(4-hydroxy-3-alkylphenyl)fluorene structural unit or a structural unit derived therefrom, and a desired additive). Within the above range, sufficient flame retardancy and sufficient forming processability are obtained. When the siloxane structural unit is a siloxane structural unit derived from the polyorganosiloxane represented by the formula (5), the content is represented by the parts by mass of the Si element of the polyorganosiloxane block.

### <Method for Producing Polycarbonate-Polydiorganosiloxane Copolymer>

### <Raw Materials of Polycarbonate-Polydiorganosiloxane Copolymer>

### (Bisphenol Compound Component of Polycarbonate Block)

The bisphenol compound serving as a raw material of the polycarbonate block is preferably a bisphenol (I) represented by the following formula (6).

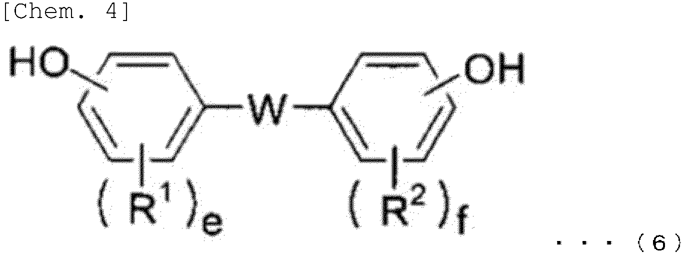

(In the above formula (6), R¹ and R² each independently represent a group selected from the group consisting of a hydrogen atom, a halogen atom, an alkyl group having 1 to 18 carbon atoms, an alkoxy group having 1 to 18 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 14 carbon atoms, an aralkyl group having 7 to 20 carbon atoms, an aralkyloxy group having 7 to 20 carbon atoms, a nitro group, an aldehyde group, a cyano group, and a carboxy group, and when there are a plurality of groups, the groups may be the same or different. e and f are each an integer of 1 to 4, and W is a single bond or at least one group selected from the group consisting of the groups represented by the following formula (4).)

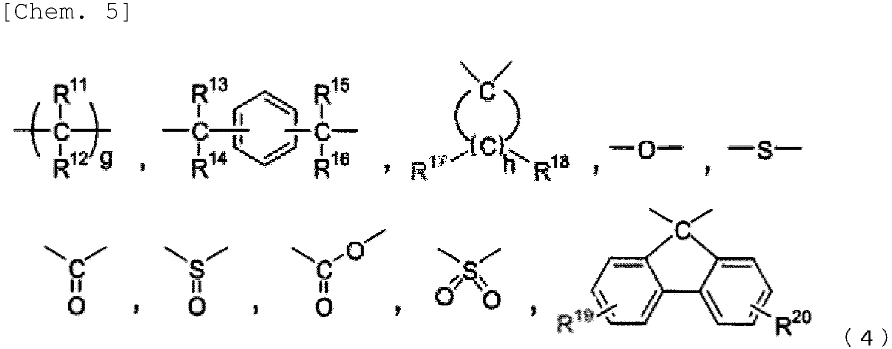

[In the above formula (4), R¹¹, R¹², R¹³, R¹⁴, R¹⁵, R¹⁶, R¹⁷, and R¹⁸ each independently represent a group selected from the group consisting of a hydrogen atom, an alkyl group having 1 to 18 carbon atoms, an aryl group having 6 to 14 carbon atoms, and an aralkyl group having 7 to 20 carbon atoms, and R¹⁹ and R²⁰ each independently represent a group selected from the group consisting of a hydrogen atom, a halogen atom, an alkyl group having 1 to 18 carbon atoms, an alkoxy group having 1 to 10 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 10 carbon atoms, an aralkyl group having 7 to 20 carbon atoms, an aralkyloxy group having 7 to 20 carbon atoms, a nitro group, an aldehyde group, a cyano group, and a carboxy group. When there are a plurality of groups, the groups may be the same or different. g is an integer of 1 to 10, and h is an integer of 4 to 7.]

Examples of the bisphenol compound (I) include 4,4'-dihydroxybiphenyl, bis(4-hydroxyphenyl)methane, 1,1-bis(4-hydroxyphenyl)ethane, 1,1-bis(4-hydroxyphenyl)-1-phenylethane, 2,2-bis(4-hydroxyphenyl)propane (commonly called bisphenol A), 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl)propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl)propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl)fluorene, 9,9-bis(4-hydroxy-3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyldiphenyl ether, 4,4'-sulfonyldiphenol, 4,4'-dihydroxydiphenyl sulfoxide, 4,4'-dihydroxydiphenyl sulfide, 2,2'-dimethyl-4,4'-sulfonyldiphenol, 4,4'-dihydroxy-3,3'-dimethyldiphenyl sulfoxide, 4,4'-dihydroxy-3,3'-dimethyldiphenyl sulfide, 2,2'-diphenyl-4,4'-sulfonyldiphenol, 4,4'-dihydroxy-3,3'-diphenyldiphenyl sulfoxide, 4,4'-dihydroxy-3,3'-diphenyldiphenyl sulfide, 1,3-bis{2-(4-hydroxyphenyl)propyl}benzene, 1,4-bis{2-(4-hydroxyphenyl)propyl}benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.02,6]decane, 4,4'-(1,3-adamantanediyl)diphenol, and 1,3-bis(4-hydroxyphenyl)-5,7-dimethyladamantane.

Of these, 1,1-bis(4-hydroxyphenyl)-1-phenylethane, 2,2-bis(4-hydroxyphenyl)propane (bisphenol A), 2,2-bis(4-hydroxy-3-methylphenyl)propane, 1,1-bis(4-hydroxyphenyl)cyclohexane, 1,1-bis(4-hydroxyphenyl)-3,3,5-trimethylcyclohexane, 4,4'-sulfonyldiphenol, 2,2'-dimethyl-4,4'-sulfonyldiphenol, 9,9-bis(4-hydroxy-3-methylphenyl)fluorene, 1,3-bis{2-(4-hydroxyphenyl)propyl}benzene, and 1,4-bis{2-(4-hydroxyphenyl)propyl}benzene are preferable, and 2,2-bis(4-hydroxyphenyl)propane (bisphenol A), 1,1-bis(4-hydroxyphenyl)cyclohexane (BPZ), 4,4'-sulfonyldiphenol, and 9,9-bis(4-hydroxy-3-methylphenyl)fluorene are particularly preferable. Of these, 2,2-bis(4-hydroxyphenyl)propane (bisphenol A) having excellent strength and good durability is most preferable. Moreover, one kind thereof or a combination of two or more kinds thereof may be used.

### (Dihydroxy Compound Component of Polydiorganosiloxane Block)

The dihydroxy compound serving as a raw material of the polydiorganosiloxane block is preferably a polydiorganosiloxane having a specific average chain length, and more preferably a hydroxyaryl-terminated polydiorganosiloxane (II) represented by the following formula (7).

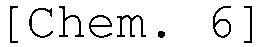

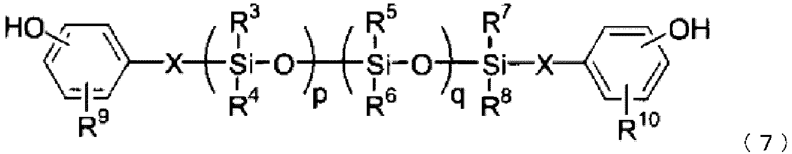

(In the above formula (7), R³, R⁴, R⁵, R⁶, R⁷, R⁸, R⁹, R¹⁰, p, q, and X are the same as those in the above formula [5].)

In the above formula (7), the average chain length p+q is preferably a natural number of 20 to 100, more preferably a natural number of 30 to 90, and further preferably a natural number of 35 to 70. When the average chain length p+q is within the above range, sufficient impact resistance is obtained, and the appearance (color unevenness, peeling defect) is also improved. In addition, hydroxyaryl-terminated polydiorganosiloxane (II) raw materials having two or more different average chain lengths p+q may be mixed for preparation to satisfy the specific chain length range. In this case, a polydiorganosiloxane (B-1) having an average chain length p+q of 1 or more and less than 60 and a polydiorganosiloxane (B-2) having an average chain length p+q of 60 or more and 200 or less are preferably used as raw materials.

The method of mixing and preparing polydiorganosiloxane raw materials may be either a method of mixing appropriate polydiorganosiloxane raw materials having hydroxyaryl-modified terminals or a method of pre-mixing polydiorganosiloxane precursors having appropriate average chain lengths before modifying the terminals with a hydroxyaryl and then modifying the terminals with a hydroxyaryl. The average chain length p+q of the polydiorganosiloxane block in the polycarbonate-polydiorganosiloxane copolymer (PC-POS copolymer) obtained by reacting the polydiorganosiloxane raw material, bisphenol, and the polycarbonate precursor is preferably 20 to 100, more preferably 30 to 90, and further preferably 35 to 70 as described above. The average chain length p+q is calculated by nuclear magnetic resonance (NMR) measurement.

The polycarbonate-polydiorganosiloxane copolymer in the present invention can be produced by the following step.

The step is a step of reacting the bisphenol compound (I) represented by the above formula (6) and phosgene in a mixture liquid of a water-insoluble organic solvent and an aqueous alkali solution to prepare a solution containing a carbonate oligomer having a terminal chloroformate group.

In the method for producing the PC-POS copolymer used in the present invention, as described above, a polydiorganosiloxane having a specific average chain length may be used as a raw material, and one kind alone or two or more kinds of hydroxyaryl-terminated polydiorganosiloxane (II) may be used. Specifically, a raw material represented by the hydroxyaryl-terminated polydiorganosiloxane (II) represented by the above formula (7) and having an average chain length p+q of 20 to 100 is used. In addition, hydroxyaryl-terminated polydiorganosiloxane (II) raw materials having two or more different average chain lengths p+q may be mixed and used in order to satisfy the specific chain length range. In this case, a polydiorganosiloxane (B-1) having an average chain length p+q of 1 or more and less than 60 and a polydiorganosiloxane (B-2) having an average chain length p+q of 60 or more and 200 or less may be used as raw materials for preparation, or a raw material obtained by pre-mixing polydiorganosiloxane precursors having appropriate average chain lengths before modifying the terminals with a hydroxyaryl and then modifying the terminals with a hydroxyaryl may also be used. Further, the polydiorganosiloxane (B-1) and the polydiorganosiloxane (B-2) may be blended in advance before the reaction with the carbonate precursor and the bisphenol or fed to the reaction solution in parallel without being blended in advance, or the (B-1) and the (B-2) may be divided and sequentially fed to the reaction solution to react with the carbonate precursor and the bisphenol. More preferably, it is desirable to feed the polydiorganosiloxane (B-1) to the reaction solution and then feed the polydiorganosiloxane (B-2) to the reaction solution to cause the reaction with the carbonate precursor and the dihydric phenol in view of efficiency and cost effectiveness by simplifying the production process facility. The weight ratio of the polydiorganosiloxanes (B-1) and (B-2) used as the raw materials is as described above.

In the interfacial polycondensation method for obtaining the PC-POS copolymer used in the present invention, the amount of the water-insoluble organic solvent per one mole of the total amount of the dihydroxy compounds represented by the formula (6) and the formula (7) is preferably eight moles or more and less than 16 moles.

Here, the total amount of the dihydroxy compounds means the total amount of the bisphenol and the polydiorganosiloxane monomer, which are the raw materials of the polycarbonate.

The amount of the insoluble organic solvent is the total amount used until the start of the polycondensation reaction through the addition of a catalyst and is the total amount of the amount used during the production of the polycarbonate oligomer, the amount used for the dissolution of the polydiorganosiloxane monomer and the chain terminator, and the amount added for adjusting the emulsified state during the interfacial polycondensation reaction.

In the interfacial polycondensation method for obtaining the PC-POS copolymer used in the present invention, when the water-insoluble organic solvent per one mole of the total amount of the dihydroxy compounds represented by the formula (6) and the formula (7) is less than the lower limit, the quality of the polymer deteriorates due to deterioration of the emulsified state during polymerization, and the viscosity of the solution is too high, resulting in a decrease in the productivity, while when the water-insoluble organic solvent exceeds the upper limit, it becomes difficult to introduce the polydiorganosiloxane block into the copolymer because the emulsified state is poor, and poor appearance is likely to occur. Further, the water-insoluble organic solvent may be added immediately after the progress of the reaction of the carbonate precursor and the bisphenol compound with the polydiorganosiloxane. Specifically, when the proportion of the unreacted polydiorganosiloxane in the reaction solution of the polydiorganosiloxane used is 10% or less, it is desirable to add two moles or more of the water-insoluble organic solvent per one mole of the total amount of the dihydroxy compounds represented by the formula (6) and the formula (7). As a result, it is possible to suppress the risk of precipitation of the polymer component due to the increased concentration while securing a sufficient degree of reaction progress.

In addition, a comonomer other than the bisphenol compound (I) and the hydroxyaryl-terminated polydiorganosiloxane (II) can be used in combination in the range of 10% by weight or less with respect to the total weight of the copolymer within the range not hindering the production method of the present invention.

In the production method of the present invention, a mixture solution containing an oligomer having a terminal chloroformate group is prepared in advance by the reaction between the bisphenol (I) and a carbonate ester-forming compound in a mixture liquid of a water-insoluble organic solvent and an aqueous alkaline solution.

When the oligomer of the bisphenol compound (I) is produced, the total amount of the bisphenol compound (I) used in the method of the present invention may be converted to the oligomer at one time, or a part thereof may be added as a monomer to be added later as a reaction raw material to the subsequent interfacial polycondensation reaction. The monomer to be added later is added in order to allow the subsequent polycondensation reaction to proceed rapidly, and it is not necessary to intentionally add the monomer to be added later when it is not necessary.

The style of the oligomer production reaction is not particularly limited, but a style performed in a solvent in the presence of an acid binder is generally preferable.

The ratio of the carbonate ester-forming compound used may be appropriately adjusted considering the stoichiometric ratio (equivalent) of the reaction. When a gaseous carbonate ester-forming compound such as phosgene is used, a method of blowing the compound into the reaction system can be suitably employed.

Examples of the acid binder include alkali metal hydroxides such as sodium hydroxide and potassium hydroxide, alkali metal carbonates such as sodium carbonate and potassium carbonate, organic bases such as pyridine, and mixtures thereof.

The ratio of the acid binder used may also be appropriately determined considering the stoichiometric ratio (equivalent) of the reaction in the same manner as described above. Specifically, it is preferable to use two equivalents or a slightly excessive amount of the acid binder with respect to the number of moles (usually one mole is equivalent to two equivalents) of the bisphenol compound (I) used for forming the oligomer.

As the solvent, one type alone or a mixture solvent of solvents inert to various reactions, such as those used for producing known polycarbonates, may be used. Typical examples thereof include hydrocarbon solvents such as xylene and halogenated hydrocarbon solvents such as methylene chloride and chlorobenzene. In particular, a halogenated hydrocarbon solvent such as methylene chloride is preferably used.

The reaction pressure of the oligomer production is not particularly restricted and may be any of normal pressure, increased pressure, and reduced pressure, but it is generally advantageous to perform the reaction under normal pressure. The reaction temperature is selected from the range of -20 to 50°C, and in many cases, heat is generated with polymerization, and thus it is desirable to perform water cooling or ice cooling. The reaction time depends on other conditions and cannot be unconditionally defined but is generally 0.2 to 10 hours.

The pH range of the oligomer production reaction is the same as the known interface reaction conditions, and the pH is always adjusted to 10 or more.

In the present invention, after a mixture solution containing the oligomer of the bisphenol compound (I) having a terminal chloroformate group is obtained in this manner, the hydroxyaryl-terminated polydiorganosiloxane (II) is added to the bisphenol compound (I) while the mixture solution is stirred, and the hydroxyaryl-terminated polydiorganosiloxane (II) and the oligomer are subjected to interfacial polycondensation to obtain a polycarbonate-polydiorganosiloxane copolymer.

In the interfacial polycondensation reaction, an acid binder may be appropriately added considering the stoichiometric ratio (equivalent) of the reaction. As the acid binder, for example, alkali metal hydroxides such as sodium hydroxide and potassium hydroxide, alkali metal carbonates such as sodium carbonate and potassium carbonate, organic bases such as pyridine, and mixtures thereof are used. Specifically, in the case where the hydroxyaryl-terminated polydiorganosiloxane (II) to be used or a part of the bisphenol compound (I) as the monomer to be added later described above is added in the reaction stage, it is preferable to use two equivalents or an excessive amount of an alkali with respect to the total number of moles (usually one mole is equivalent to two equivalents) of the bisphenol compound (I) to be added later and the hydroxyaryl-terminated polydiorganosiloxane (II).

The polycondensation by the interfacial polycondensation reaction of the oligomer of the bisphenol compound (I) and the hydroxyaryl-terminated polydiorganosiloxane (II) is performed by vigorously stirring the mixture liquid.

In the polymerization reaction, a chain terminator or a molecular weight modifier is generally used. Examples of the chain terminator include a compound having a monovalent phenolic hydroxyl group, and examples thereof include a long-chain alkylphenol, a chloride of an aliphatic carboxylic acid, an aliphatic carboxylic acid, a hydroxybenzoic acid alkyl ester, a hydroxyphenylalkyl acid ester, and an alkyl ether phenol in addition to ordinary phenol, p-tert-butylphenol, p-cumylphenol, tribromophenol, and the like. The used amount thereof is in the range of 100 to 0.5 moles, and preferably 50 to 2 moles, per 100 moles of all the dihydric phenol-based compounds used, and it is of course possible to use two or more compounds in combination.

In order to accelerate the polycondensation reaction, a catalyst such as a tertiary amine such as triethylamine and a quaternary ammonium salt may be added.

The reaction time of the polymerization reaction needs to be relatively long in order to reduce the unreacted polydiorganosiloxane block. The reaction time is preferably 30 minutes or more, and further preferably 50 minutes or more. On the other hand, since precipitation of the polymer can be caused by stirring the reaction solution for a long time, the reaction time is preferably 180 minutes or less, and further preferably 90 minutes or less.

If desired, a small amount of an antioxidant such as sodium sulfite or hydrosulfide may be added.

In the PC-POS copolymer used in the present invention, a branching agent can be used in combination with the dihydroxy compound-based compound to form a branched polycarbonate. Examples of the trifunctional or higher polyfunctional aromatic compound used in the branched polycarbonate resin include phloroglucin, phloroglucide, 4,6-dimethyl-2,4,6-tris(4-hydroxyphenyl)heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, trisphenols such as 2,6-bis(2-hydroxy-5-methylbenzyl)-4-methylphenol and 4-{4-[1,1-bis(4-hydroxyphenyl)ethyl]benzene}-α,α-dimethylbenzylphenol, tetra(4-hydroxyphenyl)methane, bis(2,4-dihydroxyphenyl)ketone, 1,4-bis(4,4-dihydroxytriphenylmethyl)benzene, trimellitic acid, pyromellitic acid, benzophenonetetracarboxylic acid, and acid chlorides thereof. Of these, 1,1,1-tris(4-hydroxyphenyl)ethane and 1,1,1-tris(3,5-dimethyl-4-hydroxyphenyl)ethane are preferable, and 1,1,1-tris(4-hydroxyphenyl)ethane is particularly preferable.

The reaction pressure can be any of reduced pressure, normal pressure, and increased pressure but can be generally preferably normal pressure or around the self pressure of the reaction system. The reaction temperature is selected from the range of -20 to 50°C, and in many cases, heat is generated with polymerization, and thus it is desirable to perform water cooling or ice cooling. The reaction time varies with other conditions such as the reaction temperature and thus cannot be unconditionally defined but is generally 0.5 to 10 hours.

In some cases, the obtained polycarbonate copolymer can be appropriately subjected to physical treatment (mixing, fractionation, and the like) and/or chemical treatment (polymer reaction, crosslinking treatment, partial decomposition treatment, and the like) to obtain a polycarbonate copolymer having a desired reduced viscosity [η_{SP}/c].

The obtained reaction product (crude product) can be subjected to various post-treatments such as a known separation and purification method to recover as a polycarbonate-polydiorganosiloxane copolymer having a desired purity (purification degree).

### <(C) Resin Having 9,9-bis(4-hydroxy-3-alkylphenyl)fluorene Structural Unit or Structural Unit Derived Therefrom (Component C)>

9,9-Bis(4-hydroxy-3-alkylphenyl)fluorene structural unit or the structural unit derived therefrom used in the present invention includes a structural unit represented by the following formula (8) or a structural unit derived therefrom.

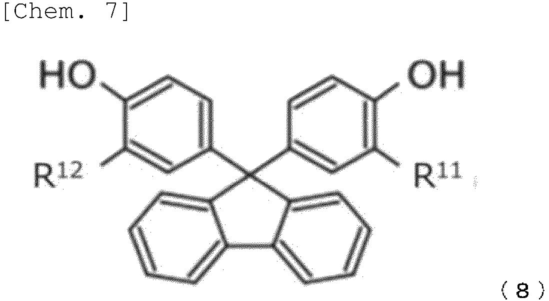

(R¹¹ and R¹² each represent an alkyl group.)

R¹¹ and R¹² each represent an alkyl group and are each preferably an alkyl group having 1 to 4 carbon atoms (a methyl group, an ethyl group, a propyl group, or a butyl group), preferably a methyl group or an ethyl group, and particularly preferably a methyl group.

From the viewpoint of the compatibility with the polycarbonate resin, a polycarbonate copolymer derived from a dihydric phenol compound and 9,9-bis(4-hydroxy-3-alkylphenyl)fluorene is preferable.

Examples of the dihydric phenol compound include the same dihydric phenol compounds as those explained in the section <(A) Carbonate Structural Unit Derived from Dihydric Phenol Compound>, and bisphenol A is particularly preferable.

The (C) resin having a structural unit derived from 9,9-bis(4-hydroxy-3-alkylphenyl)fluorene is preferably in a polycarbonate copolymer obtained using 9,9-bis(4-hydroxy-3-alkylphenyl)fluorene and another dihydric phenol compound as raw materials and particularly preferably in a polycarbonate copolymer obtained using bisphenol A and 9,9-bis(4-hydroxy-3-alkylphenyl)fluorene as raw materials.

In the polycarbonate copolymer obtained using the dihydric phenol compound and 9,9-bis(4-hydroxy-3-alkylphenyl)fluorene as raw materials, the proportion of the structural unit of 9,9-bis(4-hydroxy-3-methylphenyl)fluorene is not particularly limited but is preferably 25 to 90 mol%, more preferably 30 to 85 mol%, and further preferably 35 to 80 mol%. When a polycarbonate copolymer having such a range is used, the flame retardancy and the forming processability are excellent.

The content of 9,9-bis(4-hydroxy-3-alkylphenyl)fluorene structural unit or the structural unit derived therefrom used in the present invention is 1.0 to 40 parts by mass, preferably 1.2 to 35 parts by mass, and more preferably 1.3 to 30 parts by mass with respect to 100 parts by mass of the polycarbonate resin composition. Within the above range, sufficient flame retardancy and sufficient forming processability are obtained.

### <(D) Inorganic Filler (Component D)>

The inorganic filler preferably used as the component D in the present invention is at least one inorganic filler selected from the group consisting of talc, wollastonite, mica, and kaolin. In the case of other inorganic fillers, the flame retardancy may be poor.

The component D content is preferably 5 to 30 parts by mass, more preferably 10 to 25 parts by mass, and further preferably 15 to 20 parts by mass with respect to 100 parts by mass of the polycarbonate resin composition. When the content is 5 parts by mass or more, the flame retardancy characteristic is excellent, and when the content is 30 parts by mass or less, the forming processability is excellent.

### <Second Invention>

The polycarbonate resin composition of the second invention contains
(A) a polycarbonate resin having a carbonate structural unit derived from a dihydric phenol compound (component A) and
(E) a resin having at least one structural unit of structural units represented by the formulae (1) to (3) (structural units E) (component E)
and further preferably contains
(B) a resin having a siloxane structural unit (component B) and/or
(D) an inorganic filler (component D). Hereinafter, each component will be explained.

In the polycarbonate resin composition of the second invention, the component A (the polycarbonate resin having a carbonate structural unit derived from a dihydric phenol compound), the component B (the resin having a siloxane structural unit), and the component D (the inorganic filler) are the same as the component A, the component B, and the component D in the first invention, and the contents thereof are also the same.

### <Resin Having at Least One Structural Unit of Structural Units E (Component E)>

The component E in the polycarbonate resin composition of the second aspect of the present invention is a resin having at least one structural unit of structural units represented by the following formulae (1) to (3) (structural units E).

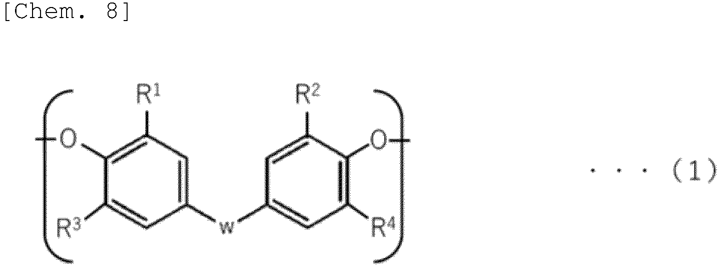

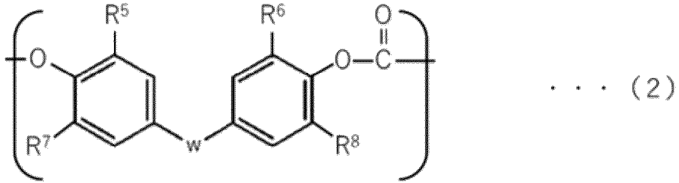

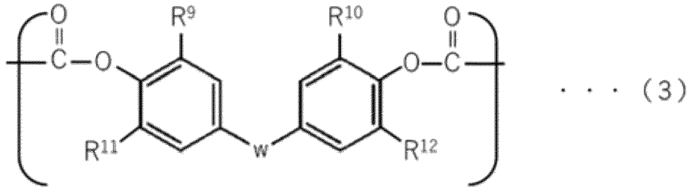

(In the formulae (1) to (3), R¹ to R¹² represent alkyl groups, W represents the following formula (4), and R¹³ to R²² each represent a hydrogen atom or a methyl group.)

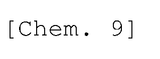

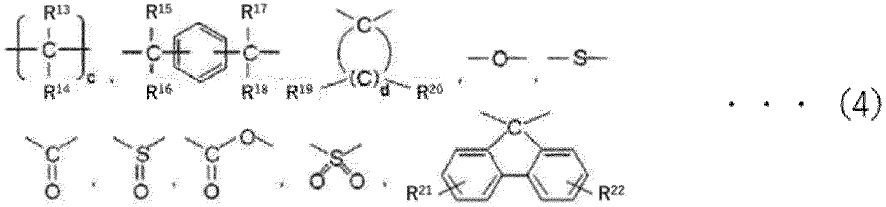

In the formulae (1) to (3), R¹ to R¹² are each preferably an alkyl group having 1 to 8 carbon atoms, more preferably an alkyl group having 1 to 4 carbon atoms, further preferably a methyl group or an ethyl group, and particularly preferably a methyl group.

Preferable specific examples of the structural units represented by the above formulae (1) to (3) include 2,2-bis(4-hydroxy-3,5-dialkylphenyl)propane, 1,1-bis(4-hydroxy-3,5-dialkylphenyl)cyclohexane, and 9,9-bis(4-hydroxy-3,5-dialkylphenyl)fluorene, and 9,9-bis(4-hydroxy-3,5-dialkylphenyl)fluorene is preferable.

From the viewpoint of the compatibility with the polycarbonate resin, a polycarbonate copolymer derived from a dihydric phenol compound and a compound constituting the structural unit represented by the formula (2) is preferable.

Examples of the dihydric phenol compound include the same dihydric phenol compounds as those explained in the section <(A) Carbonate Structural Unit Derived from Dihydric Phenol Compound (A)>, and bisphenol A is particularly preferable.

In the polycarbonate copolymer obtained using the dihydric phenol compound and the compound constituting the structural unit represented by the formula (2) as raw materials, the proportion of the structural unit represented by the formula (2) is not particularly limited but is preferably 25 to 90 mol%, more preferably 30 to 85 mol%, and further preferably 35 to 80 mol%. When a polycarbonate copolymer having such a range is used, the flame retardancy, the heat generation property, and the smoke emission property are excellent.

The content of the structural units represented by the formulae (1) to (3) used in the present invention is 5 to 70 parts by mass, preferably 6 to 60 parts by mass, and more preferably 7 to 50 parts by mass in 100 parts by mass of the polycarbonate resin composition. Within the above range, sufficient flame retardancy, sufficient heat generation property, and sufficient smoke emission property are obtained.

### <Other Additives>

For the polycarbonate resin compositions of the first invention and the second invention, in addition to the above components, a flame retardant, various stabilizers, and a release agent for stabilizing the decrease in the molecular weight and the hue during forming can be used.

### (i) Flame Retardant

Various compounds which are known as flame retardants can be blended in the polycarbonate resin composition of the present invention. Here, blending of a compound used as a flame retardant improves the flame retardancy and also improves, for example, the antistatic property, the fluidity, the rigidity, and the thermal stability based on the properties of each compound.

Examples of the flame retardant include an organic metal salt-based flame retardant (for example, an organic sulfonic acid alkali (earth) metal salt, a boric acid metal salt-based flame retardant, and a stannic acid metal salt-based flame retardant), an organic phosphorus-based flame retardant (for example, a monophosphate compound, a phosphate oligomer compound, a phosphonate oligomer compound, a phosphonitrile oligomer compound, and a phosphonic acid amide compound), a silicone-based flame retardant containing a silicone compound, and a halogen-based flame retardant (for example, a brominated epoxy resin, brominated polystyrene, brominated polycarbonate (including an oligomer), brominated polyacrylate, and chlorinated polyethylene).

### (ii) Stabilizer

Various known stabilizers can be blended in the polycarbonate resin composition of the present invention. Examples of the stabilizer include a phosphorus-based stabilizer, a hindered phenol-based antioxidant, an ultraviolet absorber, and a light stabilizer.

### (iii) Release Agent

In the polycarbonate resin composition of the present invention, a known release agent such as a fatty acid ester, a polyolefin-based wax, a silicone compound, a fluorine compound (a fluorine oil represented by a polyfluoroalkyl ether or the like), a paraffin wax, and beeswax can be further blended for the purpose of improving the productivity at the time of forming and improving the dimensional accuracy of the formed article. Since the polycarbonate resin composition of the present invention has good fluidity, a formed article having good pressure spreading and uniform strain can be obtained. In the case of a formed article having a complicated shape with increased mold release resistance, there is a risk of causing deformation of the formed article at the time of mold release. By blending the specific component, such a problem is solved without impairing the characteristics of the polycarbonate resin composition.

### [Method for Producing Polycarbonate Resin Composition]

The method for producing the polycarbonate resin composition of the present invention is not particularly restricted, and a known method can be used. In an example method, the component A, the component B, and the component C (the first invention) or the component A and the component E (the second invention), and optional other additives, may be sufficiently mixed using preliminary mixing means, such as a V-type blender, a Henschel mixer, a mechanochemical device, and an extrusion mixer, and then, if necessary, the preliminary mixture is granulated with an extrusion granulator, a briquetting machine, or the like, then melt-kneaded by a melt kneader typified by a vent-type twin-screw extruder and then pelletized by a pelletizer.

In addition, examples thereof include a method of feeding each component independently to a melt kneader typified by a vent-type twin-screw extruder, a method of feeding to a melt kneader using a supercritical fluid, and a method of preliminarily mixing a part of the components and then feeding the mixture to a melt kneader independently of the remaining components. Examples of the method of preliminarily mixing a part of the components include a method of preliminarily mixing the components other than the component A in advance and then mixing with the component A or directly feeding to the extruder. An example of the preliminary mixing method is, in a case of containing component A having a powder form, a method of producing a master batch of an additive obtained by blending a part of the powder and an additive blended with the powder and diluting with a powder and using the master batch. Further examples thereof include a method of independently feeding one component from the middle of the melt extruder. When a component to be blended is liquid, a so-called liquid injection device or a liquid addition device can be used for feeding to the melt extruder.

As the extruder, one having a vent capable of degassing the moisture in the raw materials or the volatile gas generated from the melt-kneaded resin can be preferably used. A vacuum pump for efficiently discharging the generated moisture and the volatile gas to the outside of the extruder is preferably installed from the vent. In addition, a screen for removing foreign substances and the like mixed in the extruded raw materials may be installed in a zone before the extruder die unit, and the foreign substances can be removed from the resin composition. Examples of such a screen include a wire mesh, a screen changer, and a sintered metal plate (such as a disc filter). Examples of the melt kneader include a Banbury mixer, a kneading roll, a single-screw extruder, and a multi-screw extruder having three or more screws, in addition to a twin-screw extruder.

The resin extruded as described above is directly cut into pellets, or after a strand is formed, the strand is cut with a pelletizer into pellets. When it is necessary to reduce the influence of external dust or the like on pellet formation, it is preferable to clean the atmosphere around the extruder. Further, in the production of such pellets, using various methods which have been already proposed for polycarbonate resins for an optical disc, it is possible to appropriately narrow the shape distribution of the pellets, reduce the miscut material, reduce fine powder generated during shipping or transportation and reduce air bubbles (vacuum bubbles) generated in the strand or the pellets. According to these formulations, the cycle of formation can be increased, and the rate of occurrence of defects such as silver can be reduced. The shape of the pellets can be a general shape such as a cylinder, a prism, and a sphere but is more preferably a cylinder. The diameter of such a cylinder is preferably 1 to 5 mm, more preferably 1.5 to 4 mm, and further preferably 2 to 3.3 mm. The length of the cylinder is preferably 1 to 30 mm, more preferably 2 to 5 mm, and further preferably 2.5 to 3.5 mm.

From the polycarbonate resin composition of the present invention, various products can be produced by obtaining a formed article generally by injection-molding the pellets produced as described above. In the injection molding, not only an ordinary molding method but also injection compression molding, injection press molding, gas-assisted injection molding, foam molding (including a method of injecting supercritical fluid), insert molding, in-mold coating molding, thermal insulation mold molding, rapid heating and cooling mold molding, double molding, sandwich molding, ultra-high-speed injection molding, and the like can be used. In molding, any of a cold runner mode and a hot runner mode can be selected.

The polycarbonate resin composition of the present invention can be used in the form of various extrusionmolded articles with different shapes obtained by extrusion molding, sheets, films, and the like. In addition, inflation method, calendering method, casting method, and the like can be used for forming the sheet and the film. It is also possible to form a heat-shrinkable tube through a specific stretching operation. The polycarbonate resin composition of the present invention can also be formed into a formed article by rotational molding or blow molding.

### <Characteristic Values of Resin Formed Article>

### (Flame Retardancy)

A combustion test was performed using a UL test piece having a thickness of 1.5 mm obtained by the following method in accordance with the UL94 vertical combustion test defined by the Underwriters Laboratories in the U.S. The results were classified into V-0, V-1, V-2, and not V and evaluated. The polycarbonate resin composition of the present invention preferably has V-1 or more, and more preferably V-0 or more in the UL94 vertical combustion test.

### (Heat Generation Property)

The polycarbonate resin composition of the present invention exhibits a maximum average rate of heat emission (MARHE) of preferably 90 kW/m² or less when a test piece obtained is tested using a cone calorimeter under conditions of a heater irradiance of 50 kW/m² and with an ignition in accordance with ISO5660-1. The numerical value of MARHE is preferably small, more preferably 85 kW/m² or less, further preferably 80 kW/m² or less, particularly preferably 75 kW/m² or less, and most preferably 70 kW/m² or less. When the MARHE is 90 kW/m² or less, for example, application to a member for which a higher flame retardancy level is required, in the hazard levels (HL) set from the escape time and the vehicle structure in the European railway standard EN45545-2, is possible.

### (Forming Processability)

The resin composition of the present invention is excellent in mold staining property during forming process.

### (Smoke Emission Property)

In accordance with ISO5659-2, the test piece described above was cut into a length of 75 mm × a width of 75 mm × a thickness of 3 mm and tested using "Smoke Density Chamber" manufactured by Fire Testing Technology with a heater irradiance of 50 kW/m² by a non-flame method. The specific optical density Ds (4) four minutes after starting the test as an index of smoke emission property was determined. The numerical value of Ds (4) is preferably small, but the polycarbonate resin composition of the present invention preferably has Ds (4) of 200 or less, 180 or less, 170 or less, 160 or less, 150 or less, 140 or less, or 130 or less.

### <Application of Resin Formed Article>

The resin formed article of the present invention can be used as a component such as an automobile-related component, a railroad-related component, an aircraft-related component, a household electric appliance component, an electric/electronic device component, a residential facility component, an OA device component, a game tool component, or an eyeglass component.

Examples of the railroad-related component include a vehicle inner wall, a heat-insulating material, an in-vehicle device housing, a luggage area, an operation surface, a window, a curtain, a table, a seat chair member, an air duct, and an in-vehicle display. Of these, a vehicle inner wall, a table, and a seat chair are preferable.

Examples of the aircraft-related component include a ceiling inner wall, a partition, a galley member, a baggage rack, a window, a soundproofing material, an air duct, an airplane display, and a switch. Of these, a partition, a baggage rack, a window, and a switch are preferable.

### Examples

Hereinafter, the present invention will be explained in more detail with Examples, but the present invention is not limited thereto. Unless otherwise noted, the parts in the Examples are parts by weight, and % is % by weight. The evaluation was performed according to the following method.

### (Component A: Polycarbonate Resin)

A: an aromatic polycarbonate resin (a polycarbonate resin powder having a viscosity-average molecular weight of 23,900 produced by a general method from bisphenol A and phosgene, Panlite L-1250WP (product name) produced by Teijin Limited)

### (Component B: Resin Having Siloxane Structural Unit)

### B-1 to 3: polycarbonate-polydiorganosiloxane copolymers

### (Production Method of B-1)

To a reactor having a thermometer, a stirrer, and a reflux condenser, 17890 parts of ion-exchanged water and 7003 parts of a 25% aqueous sodium hydroxide solution were put, and 3812 parts of 2,2-bis(4-hydroxyphenyl)propane (bisphenol A) as the dihydric phenol (I) represented by the general formula [4] and 7.5 parts of hydrosulfite were dissolved. Then, 14310 parts of methylene chloride were added, and 1900 parts of phosgene were blown at 22 to 30°C over 70 minutes under stirring. After adding 7150 parts of methylene chloride and adding a solution obtained by dissolving 1347 parts of a 25% aqueous sodium hydroxide solution and 149 parts of p-tert-butylphenol in 850 parts of methylene chloride, a solution obtained by dissolving 428 parts of KF-2201 as the dihydric phenol (II) represented by the general formula [5] in 800 parts of methylene chloride (0.55 molar equivalents with respect to the total amount of the dihydric phenols) was added with stirring at a speed at which the dihydric phenol (II) became 0.0008 molar equivalent/min with respect to the dihydric phenol (I) to obtain an emulsified state, followed by vigorous stirring again. Under such stirring, 4.3 parts of triethylamine were added in a state where the reaction solution was at 26°C. Stirring was continued for one hour at a temperature of 26 to 31°C, and the reaction was completed. After the completion of the reaction, the organic phase was separated, diluted with methylene chloride, washed with water, then acidified with hydrochloric acid and washed with water. When the conductivity of the aqueous phase became almost the same as that of ion-exchanged water, the mixture was put into a kneader containing warm water, and methylene chloride was evaporated while stirring to obtain a powder of a polycarbonate-polydiorganosiloxane copolymer. After dehydration, the mixture was dried at 100°C for 12 hours with a hot air circulation dryer. The viscosity-average molecular weight of the obtained polycarbonate-polydiorganosiloxane copolymer was 16,000, and the Si element content of the polydiorganosiloxane block was 8.4 parts by mass.

### (Production Method of B-2)

Preparation was performed by the same method as the production method of B-1, except that the amount of 2,2-bis(4-hydroxyphenyl)propane (bisphenol A) was changed to 3996 parts, the amount of p-tert-butylphenol was changed to 149 parts, and the amount of KF-2201 was changed to 648 parts. The viscosity-average molecular weight of the obtained polycarbonate-polydiorganosiloxane copolymer was 20,500, and the Si element content of the polydiorganosiloxane block was 14.5 parts by mass.

### (Production Method of B-3)

Preparation was performed by the same method as the production method of B-1, except that the amount of 2,2-bis(4-hydroxyphenyl)propane (bisphenol A) was changed to 4,320 parts, the amount of p-tert-butylphenol was changed to 149 parts, and the amount of KF-2201 was changed to 2023 parts. The viscosity-average molecular weight of the obtained polycarbonate-polydiorganosiloxane copolymer was 22,500, and the Si element content of the polydiorganosiloxane block was 50.0 parts by mass.

B-4: KR-2710 (silicone flame retardant manufactured by Shin-Etsu Chemical Co., Ltd., Si element amount of 15% by weight)

### (Component C)

C-1: BCF (manufactured by Osaka Gas Chemicals Co., Ltd., 9,9-bis(4-hydroxy-3-methylphenyl)fluorene)
C-2 and C-3: polycarbonate copolymers obtained using bisphenol A and 9,9-bis(4-hydroxy-3-methylphenyl)fluorene as raw materials

### (Production Method of C-2)

To a reactor having a thermometer, a stirrer, and a reflux condenser, 4,554 parts of a 48% aqueous sodium hydroxide solution and 22,730 parts of ion-exchanged water were put, and 4,345 parts of 9,9-bis(4-hydroxy-3-methylphenyl)fluorene (manufactured by Honshu Chemical Industry Co., Ltd.), 1,125 parts of bisphenol A (manufactured by NIPPON STEEL Chemical & Material Co., Ltd.), and 7.94 parts of hydrosulfite (manufactured by Wako Pure Chemical Industries, Ltd.) were dissolved therein. Then, 13,415 parts of methylene chloride were added thereto, and 2,000 parts of phosgene were blown at 15 to 25°C over about 70 minutes under stirring. After the completion of the blowing of phosgene, 650 parts of a 48% aqueous sodium hydroxide solution and 92.3 parts of p-tert-butylphenol were added, and after restarting stirring and emulsifying, 5.6 parts of triethylamine were added. The mixture was further stirred at 28 to 35°C for one hour, and the reaction was completed.

After the completion of the reaction, the product was diluted with methylene chloride and washed with water. Then, hydrochloric acid was added, and the mixture was acidified, washed with water and further washed with water repeatedly until the conductivity of the aqueous phase became almost the same as that of ion-exchanged water, thereby obtaining a methylene chloride solution of the polycarbonate resin. Next, this solution was allowed to pass through a filter having an opening of 0.3 µm and dropped into warm water in a kneader having an isolation chamber having a foreign matter extraction port in the bearing portion, and the polycarbonate resin was flaked while methylene chloride was distilled off, followed by crushing and drying the liquid-containing flakes to obtain a powder (C-2). The results of the evaluation of the powder are shown in Table 1.

### (Production Method of C-3)

To a reactor having a thermometer, a stirrer, and a reflux condenser, 4,555 parts of a 48% aqueous sodium hydroxide solution and 22,730 parts of ion-exchanged water were put, and 2,386 parts of 9,9-bis(4-hydroxy-3-methylphenyl)fluorene (manufactured by Honshu Chemical Industry Co., Ltd.), 2,162 parts of bisphenol A (manufactured by NIPPON STEEL Chemical & Material Co., Ltd.), and 7.94 parts of hydrosulfite (manufactured by Wako Pure Chemical Industries, Ltd.) were dissolved therein. Then, 13,415 parts of methylene chloride were added thereto, and 2,000 parts of phosgene were blown at 15 to 25°C over about 70 minutes under stirring. After the completion of the blowing of phosgene, 650 parts of a 48% aqueous sodium hydroxide solution and 92.3 parts of p-tert-butylphenol were added, and after restarting stirring and emulsifying, 5.6 parts of triethylamine were added. The mixture was further stirred at 28 to 35°C for one hour, and the reaction was completed.

After the completion of the reaction, the product was diluted with methylene chloride and washed with water. Then, hydrochloric acid was added, and the mixture was acidified, washed with water and further washed with water repeatedly until the conductivity of the aqueous phase became almost the same as that of ion-exchanged water, thereby obtaining a methylene chloride solution of the polycarbonate resin. Next, this solution was allowed to pass through a filter having an opening of 0.3 µm and dropped into warm water in a kneader having an isolation chamber having a foreign matter extraction port in the bearing portion, and the polycarbonate resin was flaked while methylene chloride was distilled off, followed by crushing and drying the liquid-containing flakes to obtain a powder (C-2). The results of the evaluation of the powder are shown in Table 1.

C-4: BPF (Osaka Gas Chemicals Co., Ltd., 9,9-bis(4-hydroxyphenyl)fluorene)
C-5: a polycarbonate copolymer obtained using bisphenol A and 9,9-bis(4-hydroxyphenyl)fluorene as raw materials

### (Production Method of C-5)

To a reactor having a thermometer, a stirrer, and a reflux condenser, 4,555 parts of a 48% aqueous sodium hydroxide solution and 22,730 parts of ion-exchanged water were put, and 2,386 parts of 9,9-bis(4-hydroxyphenyl)fluorene (manufactured by Honshu Chemical Industry Co., Ltd.), 1,439 parts of bisphenol A (manufactured by NIPPON STEEL Chemical & Material Co., Ltd.), and 7.94 parts of hydrosulfite (manufactured by Wako Pure Chemical Industries, Ltd.) were dissolved therein. Then, 13,415 parts of methylene chloride were added thereto, and 2,000 parts of phosgene were blown at 15 to 25°C over about 70 minutes under stirring. After the completion of the blowing of phosgene, 650 parts of a 48% aqueous sodium hydroxide solution and 92.3 parts of p-tert-butylphenol were added, and after restarting stirring and emulsifying, 5.6 parts of triethylamine were added. The mixture was further stirred at 28 to 35°C for one hour, and the reaction was completed.

### (Component D)

D-1: Victory Light TK-RC, talc (manufactured by Shokozan Mining Co., Ltd.)
D-2: SH-1250, wollastonite (manufactured by KINSEI MATEC CO., LTD.)
D-3: MT200B, mica (manufactured by KINSEI MATEC CO., LTD.)
D-4: TRANSLINK TL-77, kaolin (manufactured by BASF Japan Ltd.)
D-5: MEG160FYX, glass flake (Nippon Sheet Glass Co., Ltd.)

### (Component E)

### E-1: a polycarbonate copolymer obtained using bisphenol A and 9,9-bis(4-hydroxy-3,5-methylphenyl)fluorene (referred to as BXF) as raw materials (bisphenol A: BXF = 30:70 (ratio by mole))

### (Production Method of E-1)

To a reactor having a thermometer, a stirrer, and a reflux condenser, 4,554 parts of a 48% aqueous sodium hydroxide solution and 22,730 parts of ion-exchanged water were put, and 4,345 parts of 9,9-bis(4-hydroxy-3,5-methylphenyl)fluorene (manufactured by Osaka Gas Chemicals Co., Ltd.), 1,125 parts of bisphenol A (manufactured by NIPPON STEEL Chemical & Material Co., Ltd.), and 7.94 parts of hydrosulfite (manufactured by Wako Pure Chemical Industries, Ltd.) were dissolved therein. Then, 13,415 parts of methylene chloride were added thereto, and 2,000 parts of phosgene were blown at 15 to 25°C over about 70 minutes under stirring. After the completion of the blowing of phosgene, 650 parts of a 48% aqueous sodium hydroxide solution and 92.3 parts of p-tert-butylphenol were added, and after restarting stirring and emulsifying, 5.6 parts of triethylamine were added. The mixture was further stirred at 28 to 35°C for one hour, and the reaction was completed.

After the completion of the reaction, the product was diluted with methylene chloride and washed with water. Then, hydrochloric acid was added, and the mixture was acidified, washed with water and further washed with water repeatedly until the conductivity of the aqueous phase became almost the same as that of ion-exchanged water, thereby obtaining a methylene chloride solution of the polycarbonate resin. Next, this solution was allowed to pass through a filter having an opening of 0.3 µm and dropped into warm water in a kneader having an isolation chamber having a foreign matter extraction port in the bearing portion, and the polycarbonate resin was flaked while methylene chloride was distilled off, followed by crushing and drying the liquid-containing flakes to obtain a powder (E-1).

### E-2: a polycarbonate copolymer obtained using bisphenol A and 9,9-bis(4-hydroxy-3,5-ethylphenyl)fluorene (referred to as BZF) as raw materials (bisphenol A: BZF = 50:50 (ratio by mole))

### (Production Method of E-2)

A powder E-2 was obtained by the same method as in Production Example of E-1, except that 9,9-bis(4-hydroxy-3,5-methylphenyl)fluorene was not used and 2,386 parts of 9,9-bis(4-hydroxy-3,5-ethylphenyl)fluorene and 1,439 parts of bisphenol A were used.

E-3: BXF (manufactured by Osaka Gas Chemicals Co., Ltd., 9,9-bis(4-hydroxy-3,5-methylphenyl)fluorene)
E-4 (Comparative Example): BCF (manufactured by Osaka Gas Chemicals Co., Ltd., 9,9-bis(4-hydroxy-3-methylphenyl)fluorene)
E-5 (Comparative Example): BPF (manufactured by Osaka Gas Chemicals Co., Ltd., 9,9-bis(4-hydroxyphenyl)fluorene)

### (Other Components)

F-1: DIACARNA 30M, a modifier (Mitsubishi Chemical Corporation)
F-2: KBM3130, a modifier (Shin-Etsu Chemical Co., Ltd.)

### [Production of Resin Composition]

### (Examples 1 to 27 and Comparative Examples 1 to 15)

The components shown in Tables 1 to 3 were mixed at the ratios shown in Tables 1 to 3, melt-kneaded at 280°C using a twin-screw extruder [TEX30α-3, manufactured by The Japan Steel Works, LTD.] and formed into pellets while degassing with a vacuum vent. A part of the obtained pellets was dried in a hot air circulation dryer at 120°C for six hours, and then a flat plate and a UL test piece were formed using an injection molding machine at a cylinder temperature of 280°C and a mold temperature of 80°C.

### [Evaluation of Resin Composition]

### (i) Heat Generation Property [Maximum Average Rate of Heat Emission: MARHE]

The pellets obtained by the above method were dried at 120°C for five hours or more, and then a flat plate (150 mm × 150 mm × 3 mmt) was molded by a molding machine ("α-S10iSA" manufactured by Mitsubishi-FANUC) at a resin temperature of 280°C and a mold temperature of 80°C. The obtained test piece was cut into 100 mm × 100 mm × 3 mmt.

In accordance with ISO5660-1, the obtained test piece was tested using a cone calorimeter C3 manufactured by Toyo Seiki Seisaku-sho, Ltd. under conditions of a heater irradiance of 50 kW/m² and with an ignition, and the heat generation rate was measured. The integrated value of the obtained heat generation rate was divided by the number of seconds up to that time point, and the maximum average rate of heat emission: MARHE (unit: kW/m²) was thus calculated. The numerical value of MARHE is preferably small.

### (ii) Forming Processability

The pellets obtained by the above method were dried at 120°C for five hours or more and then molded by a molding machine ("α-S10iSA" manufactured by Mitsubishi-FANUC) at a resin temperature of 280°C and a mold temperature of 80°C. The mold staining by the gas generated from the resin composition was visually evaluated at this point, and the mold staining was determined based on the following criteria.

P: There is no or very little staining of the mold with the generated gas.

F: Staining of the mold with the generated gas is observed.

### (iii) Flame Retardancy

A combustion test was performed using a UL test piece having a thickness of 1.5 mm obtained by the above method in accordance with the UL94 vertical combustion test defined by the Underwriters Laboratories in the U.S. The results were classified into V-0, V-1, V-2, and not V and evaluated.

### (iv) Smoke Emission Property

In accordance with ISO5659-2, the above test piece was cut into a length of 75 mm × a width of 75 mm × a thickness of 3 mm and tested using "Smoke Density Chamber" manufactured by Fire Testing Technology with a heater irradiance of 50 kW/m² by a non-flame method. The specific optical density Ds (4) four minutes after starting the test as an index of smoke emission property was determined.

### [Table 1]

**Table 1**

| | | | Unit | Examples | | | | | | | | | | | | | | | |
|---|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 | 15 | 16 |
| Component A | | Polycarbonate Using Bisphenol A as Raw Material | Parts by Mass | 39.0 | 39.0 | 29.0 | 29.0 | 65.0 | 9.0 | 47.0 | 19.0 | 59.0 | 54.0 | 29.0 | 39.0 | 39.0 | 39.0 | 39.0 | 66.0 |
| Component B | B-1 | W-0052 (SiPC: Si amount 8.4 parts) | Parts by Mass | 30.0 | 30.0 | 30.0 | 30.0 | 4.0 | | 30.0 | 30.0 | 30.0 | 30.0 | 30.0 | 30.0 | 30.0 | 30.0 | 30.0 | |
| | B-2 | W-0191 (SiPC: Si amount 14.5 parts) | | | | | | | | | | | | | | | | | |
| | B-3 | W-XXXX (SiPC: Si amount 50.0 parts) | | | | | | | 60.0 | | | | | | | | | | |
| | B-4 | KR-2710 (silicone flame retardant: Si amount 15 parts) | | | | | | | | | | | | | | | | | 3.0 |
| Component C | C-1 | BCF | Parts by Mass | 10.0 | | | | | | | | | | | | | | | |
| | C-2 | W-0044 (BisA/BCF = 30/70) | | | 10.0 | 20.0 | | 10.0 | 10.0 | 2.0 | 30.0 | 10.0 | 10.0 | 10.0 | 10.0 | 10.0 | 10.0 | 10.0 | 10.0 |
| | C-3 | W-0040 (BisA/BCF = 60/40) | | | | | 20.0 | | | | | | | | | | | | |
| | C-4 | BPF | | | | | | | | | | | | | | | | | |
| | C-5 | BisA/BPF copolymer (BisA/BPF = 30/70) | | | | | | | | | | | | | | | | | |
| Component D | D-1 | Talc | Parts by Mass | 20.0 | 20.0 | 20.0 | 20.0 | 20.0 | 20.0 | 20.0 | 20.0 | 0.0 | 5.0 | 30.0 | | | | | 20.0 |
| | D-2 | Wollastonite | | | | | | | | | | | | | 20.0 | | | | |
| | D-3 | Mica | | | | | | | | | | | | | | 20.0 | | | |
| | D-4 | Kaolin | | | | | | | | | | | | | | | 20.0 | | |
| | D-5 | Glass Flake | | | | | | | | | | | | | | | | 20.0 | |
| Component F | F-1 | DC30 | Parts by Mass | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | F-2 | KBM3130 | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Si Element Content | | | Parts by Mass | 2.52 | 2.52 | 2.52 | 2.52 | 0.34 | 30.0 | 2.52 | 2.52 | 2.52 | 2.52 | 2.52 | 2.52 | 2.52 | 2.52 | 2.52 | 0.45 |
| Component C Amount | | | Parts by Mass | 10.0 | 7.0 | 14.0 | 8.0 | 7.0 | 7.0 | 1.4 | 21.0 | 7.0 | 7.0 | 7.0 | 7.0 | 7.0 | 7.0 | 7.0 | 7.0 |
| Heat Generation Property (MARHE) | | | kW/m² | 72 | 71 | 57 | 61 | 86 | 89 | 88 | 45 | 89 | 88 | 69 | 72 | 74 | 75 | 81 | 87 |
| Forming Processability | | | - | P | P | P | P | P | P | P | P | P | P | P | P | P | P | P | P |

### [Table 2]

**Table 2**

| | | | Unit | Comparative Example | | | | | | | | |
|---|---|---|---|---|---|---|---|---|---|---|---|---|
| | | | | 1 | 2 | 3 | 4 | 5 | 6 | 7 | 8 | 9 |
| Component A | | Polycarbonate Using Bisphenol A as Raw Material | Parts by Mass | 79.0 | 49.0 | 69.0 | 66.0 | 0.0 | 48.5 | 4.0 | 29.0 | 29.0 |
| Component B | B-1 | W-0052 (SiPC: Si amount 8.4 parts) | Parts by Mass | | 30.0 | | 3.0 | | 30.0 | 30.0 | 30.0 | 30.0 |
| | B-2 | W-0191 (SiPC: Si amount 14.5 parts) | | | | | | | | | | |
| | B-3 | W-XXXX (SiPC: Si amount 50.0%) | | | | | | 69.0 | | | | |
| | B-4 | KR-2710 (silicone flame retardant: Si amount 15 parts) | | | | | | | | | | |
| Component C | C-1 | BCF | Parts by Mass | | | | | | | 45.0 | | |
| | C-2 | W-0044 (BisA/BCF = 30/70) | | | | 10.0 | 10.0 | 10.0 | 0.5 | | | |
| | C-3 | W-0040 (BisA/BCF = 60/40) | | | | | | | | | | |
| | C-4 | BPF | | | | | | | | | 20.0 | |
| | C-5 | BisA/BPF copolymer (BisA/BPF = 30/70) | | | | | | | | | | 20.0 |
| Component D | D-1 | Talc | Parts by Mass | 20.0 | 20.0 | 20.0 | 20.0 | 20.0 | 20.0 | 20.0 | 20.0 | 20.0 |
| | D-2 | Wollastonite | | | | | | | | | | |
| | D-3 | Mica | | | | | | | | | | |
| | D-4 | Kaolin | | | | | | | | | | |
| | D-5 | Glass Flake | | | | | | | | | | |
| Component F | F-1 | DC30 | Parts by Mass | 0.5 | 0.5 | 0.5 | 0.5 | 0.5 | 0.5 | 0.5 | 0.5 | 0.5 |
| | F-2 | KBM3130 | | 0.5 | 0.5 | 0.5 | 0.5 | 0.5 | 0.5 | 0.5 | 0.5 | 0.5 |
| Si Element Content | | | Parts by Mass | 0.0 | 2.52 | 0.00 | 0.25 | 34.5 | 2.52 | 2.52 | 2.52 | 2.52 |
| Component C Amount | | | Parts by Mass | 0.0 | 0.0 | 7.0 | 7.0 | 7.0 | 0.35 | 45.0 | 0.0 | 0.0 |
| Heat Generation Property (MARHE) | | | kW/m² | 200 | 95 | 95 | 91 | 94 | 93 | 111 | 98 | 95 |
| Forming Processability | | | - | P | P | P | P | F | P | F | F | F |

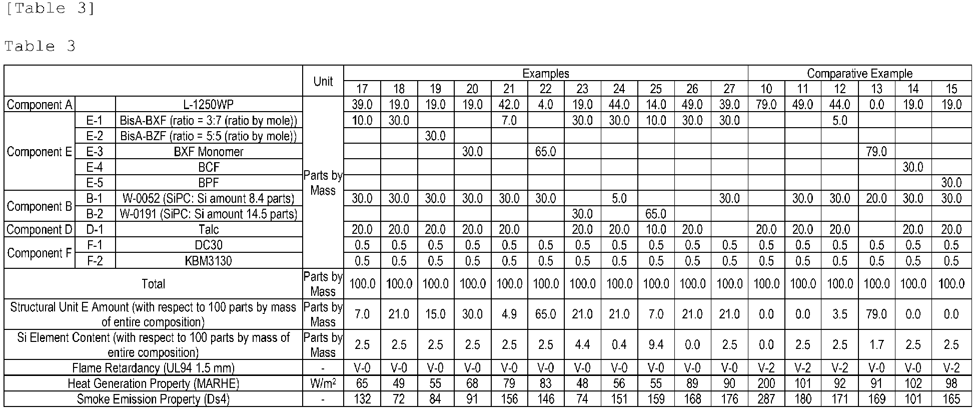

From Table 1 to Table 3, it can be seen that a polycarbonate resin composition that is excellent in flame retardancy and forming processability and a formed article formed therefrom can be provided by the composition of the present invention.

### Industrial Applicability

The polycarbonate resin composition and the formed article of the present invention can be widely used in aviation applications, railroad applications, and various other applications.

## Claims

1. A polycarbonate resin composition, comprising:
(A) a polycarbonate resin having a carbonate structural unit derived from a dihydric phenol compound (component A);
(B) a resin having a siloxane structural unit (component B); and
(C) a resin having 9,9-bis(4-hydroxy-3-alkylphenyl)fluorene structural unit or a structural unit derived therefrom (component C):
wherein with respect to 100 parts by mass of the polycarbonate resin composition,
the amount of the Si element derived from the siloxane structural unit of the component B is in the range of 0.3 to 30.0 parts by mass, and
the component C content is in the range of 1.0 to 40 parts by mass.

2. The polycarbonate resin composition according to claim 1, comprising
5 to 30 parts by mass of (D) at least one inorganic filler selected from the group consisting of talc, wollastonite, mica, and kaolin (component D)
with respect to 100 parts by mass of the polycarbonate resin composition.

3. The polycarbonate resin composition according to claim 1 or 2, wherein the component A contains a polycarbonate resin having a carbonate structural unit derived from bisphenol A.

4. The polycarbonate resin composition according to any one of claims 1 to 3, wherein the component B contains a resin having a siloxane structural unit derived from a polydiorganosiloxane.

5. The polycarbonate resin composition according to any one of claims 1 to 4, wherein the component B contains a polycarbonate copolymer obtained using bisphenol A and a polydiorganosiloxane as raw materials.

6. The polycarbonate resin composition according to any one of claims 1 to 5, wherein the resin having the structural unit derived from 9,9-bis(4-hydroxy-3-alkylphenyl)fluorene of the component C contains a polycarbonate copolymer obtained using 9,9-bis(4-hydroxy-3-alkylphenyl)fluorene and another dihydric phenol compound as raw materials.

7. The polycarbonate resin composition according to any one of claims 1 to 6, wherein the resin having the 9,9-bis(4-hydroxy-3-alkylphenyl)fluorene structural unit of the component C contains a polycarbonate copolymer obtained using bisphenol A and 9,9-bis(4-hydroxy-3-alkylphenyl)fluorene as raw materials.

8. The polycarbonate resin composition according to any one of claims 1 to 7, wherein the maximum average rate of heat emission tested under conditions of a heater irradiance of 50 kW/m² and with an ignition in accordance with ISO5660-1 is 90 kW/m² or less.

9. A formed article formed from the polycarbonate resin composition according to any one of claims 1 to 8.

10. The formed article according to claim 9 which is a railcar interior member.

11. A polycarbonate resin composition, comprising:
(A) a polycarbonate resin having a carbonate structural unit derived from a dihydric phenol compound (component A); and
(E) a resin having at least one structural unit of structural units represented by the following formulae (1) to (3) (structural units E) (component E):
wherein the polycarbonate resin composition contains at least one of the structural units E in the range of 5 to 70 parts by mass with respect to 100 parts by mass of the polycarbonate resin composition: 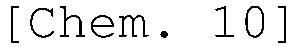 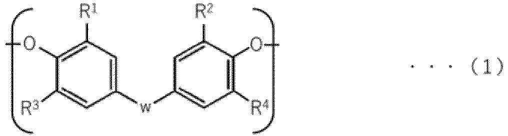 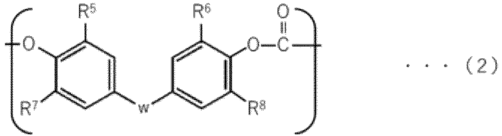 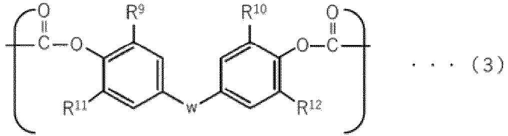
wherein in the formulae (1) to (3),
R¹ to R¹² represent alkyl groups,
W represents the following formula (4), and
R¹³ to R²² each represent a hydrogen atom or a methyl group.

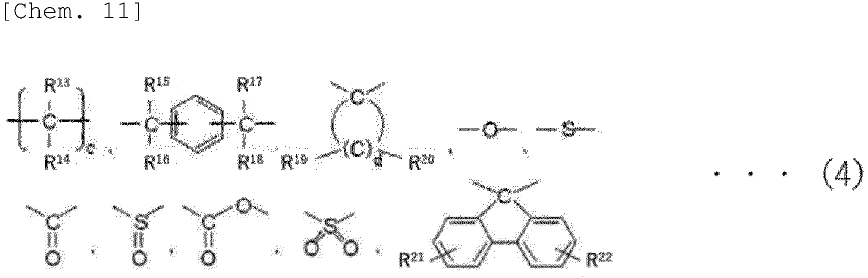

12. The polycarbonate resin composition according to claim 11, wherein W is a fluorene derivative.

13. The polycarbonate resin composition according to claim 11 or 12, further comprising
(B) a resin having a siloxane structural unit (component B),
wherein the amount of the Si element derived from the siloxane structural unit of the component B is 0.3 to 10.0 parts by mass
with respect to 100 parts by mass of the polycarbonate resin composition.

14. The polycarbonate resin composition according to any one of claims 11 to 13, further comprising
5 to 30 parts by mass of (D) at least one inorganic filler selected from the group consisting of talc, wollastonite, mica, and kaolin (component D)
with respect to 100 parts by mass of the polycarbonate resin composition.

15. A formed article formed from the polycarbonate resin composition according to any one of claims 11 to 14.

16. The formed article according to claim 15 which is a railcar interior member.
